(19) Europäisches Patentamt
European Patent Office
Office européen des brevets

(11) **EP 4 500 078 B1**

(12) **EUROPEAN PATENT SPECIFICATION**

(45) Date of publication and mention
of the grant of the patent:
**22.10.2025 Bulletin 2025/43**

(21) Application number: **23712561.2**

(22) Date of filing: **23.03.2023**

(51) International Patent Classification (IPC):
***F21V 8/00*** *(2006.01)*

(52) Cooperative Patent Classification (CPC):
**G02B 6/0036**

(86) International application number:
**PCT/EP2023/057407**

(87) International publication number:
**WO 2023/180416 (28.09.2023 Gazette 2023/39)**

(54) **LIGHTGUIDE PLATE WITH LIGHTING GRADIENT**

**LICHTLEITERPLATTE MIT BELEUCHTUNGSGRADIENTEN**

**PLAQUE DE GUIDE DE LUMIÈRE À GRADIENT D'ÉCLAIRAGE**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.03.2022 EP 22163991**

(43) Date of publication of application:
**05.02.2025 Bulletin 2025/06**

(73) Proprietor: **Signify Holding B.V.
5656 AE Eindhoven (NL)**

(72) Inventors:
• **VAN BOMMEL, Ties
5656 AE Eindhoven (NL)**
• **HIKMET, Rifat, Ata, Mustafa
5656 AE Eindhoven (NL)**

(74) Representative: **Verweij, Petronella Daniëlle
Signify Netherlands B.V.
Intellectual Property
High Tech Campus 7
5656 AE Eindhoven (NL)**

(56) References cited:
**WO-A2-2014/033686      US-A1- 2011 286 236
US-A1- 2013 163 284      US-A1- 2015 009 783**

**Description**

FIELD OF THE INVENTION

The invention relates to a light generating system and to a lighting device comprising such light generating system.

BACKGROUND OF THE INVENTION

Lightguide plates are known in the art. US2012/0243256, for instance, describes a light guide plate including a lateral side through which light enters and a front side through which light exits. A phosphor is coated on the lateral side. A light source includes a plurality of light emitting diodes (LEDs) having wavelengths of 230-520 nanometers (nm). The LEDs are mounted proximate to the lateral side and corresponding to, but separated from, the phosphor. A reflector includes a reflective surface and is mounted on a back side of the light guide plate with the reflective surface facing the light guide plate. A frame fixes the light guide plate, the light source, and the reflector. Colors of the phosphor and the light source are complementary. The phosphor absorbs light from the light source to transition into an excited state. The light guide plate outputs light from the light source and the phosphor through the front side.

SUMMARY OF THE INVENTION

It appears desirable to provide lighting system that may provide different types of light. Further, it appears desirable to provide a plurality of light generating devices in such system to provide a high intensity of (system) light. Further, it appears sometimes desirable to provide a specific distribution of the radiant flux (or luminous flux) over a light emitting face of such system.

Prior art system, however, do not seem to appear one or more, especially a plurality of the above indicated desires and/or may provide relative complex systems. Hence, it is an aspect of the invention to provide an alternative light generating system, which preferably further at least partly obviates one or more of above-described drawbacks. The present invention may have as object to overcome or ameliorate at least one of the disadvantages of the prior art, or to provide a useful alternative.

The present invention is defined by the appended independent and dependent claims.

According to a first aspect, the invention provides a light generating system ("system") comprising a lighting arrangement. Especially, the lighting arrangement ("arrangement") may comprise a lightguide body, a first light generating device, and a second light generating device. **In** embodiments, the first light generating device is configured to generate first radiation. Especially, the first radiation may have a first spectral power distribution having wavelength in one or more of UV and visible. **In** embodiments, the second light generating device is configured to generate second radiation. Especially, the second radiation may have a second spectral power distribution having a wavelength in one or more of UV and visible. In specific embodiments, the first spectral power distribution and the second spectral power distribution may differ. In embodiments, the lightguide body may comprise a first face and one or more side faces. The latter may especially be configured under an angle with the first face. In specific embodiments, the lightguide body may comprise light outcoupling structures. In embodiments, the first light generating device, the second light generating device, and the lightguide body may be configured such that at least part of the first radiation and the second radiation is coupled into the lightguide body via the one or more side faces. Further, in specific embodiments at least part of the incoupled first radiation and second radiation may be coupled out from the lightguide body via the first face. Yet, in specific embodiments the first light generating device, the second light generating device, and the light outcoupling structures may be configured such that a ratio of a first radiant flux of the outcoupled first radiation and a second radiant flux of the outcoupled second radiation may vary over the first face, especially may gradually vary over the first face. Especially, the light generating system may be configured to generate system light ("system radiation") comprising one or more of (i) at least part of the outcoupled first radiation and (ii) at least part of the outcoupled second radiation.

Especially, in embodiments the invention provides a light generating system comprising a lighting arrangement, wherein the lighting arrangement comprises a lightguide body, a first light generating device, and a second light generating device, wherein: (A) the first light generating device is configured to generate first radiation having a first spectral power distribution having wavelength in one or more of UV and visible; the second light generating device is configured to generate second radiation having a second spectral power distribution having a wavelength in one or more of UV and visible; wherein the first spectral power distribution and the second spectral power distribution differ; (B) the lightguide body comprises a first face and one or more side faces configured under an angle with the first face; wherein the lightguide body comprises light outcoupling structures; (C) the first light generating device, the second light generating device, and the lightguide body are configured such that at least part of the first radiation and the second radiation is coupled into the lightguide body via the one or more side faces, and at least part of the incoupled first radiation and second radiation is coupled out from the lightguide body via the first face; (D) the first light generating device, the second light generating device, and the light outcoupling structures are configured such that a ratio of a first radiant flux of the outcoupled first radiation and a second radiant flux of the outcoupled second radiation (gradually) varies over the first face; and (E) the light generating system is configured to generate system light comprising one or more of (i) at least part of the outcoupled first radiation and (ii) at least part of the outcoupled second radiation; wherein the light outcoupling structures comprise a first type of light outcoupling structures and a second type of light outcoupling structures; wherein the first type of light outcoupling structures more efficiently couple first device radiation out than second device radiation, and wherein the second types of light outcoupling structures more efficiently couple second device radiation out than first device radiation, OR wherein the first type of light outcoupling structures more efficiently couple first device radiation out than second device radiation, and the second type of light outcoupling structures couple out second device radiation and first device radiation about equally efficient.

With such system it may be possible to provide a spatially substantially even distribution of radiation of a first type and a spatially uneven distribution of radiation of a first type. This may allow providing a system having a dual function, in a relatively easy way, like general lighting and disinfection lighting, or general lighting and a color effect, or radiation having a first effect which radiation is evenly distributed and radiation having a second effect for which it may be desirable that the radiation is less evenly distribution, such as locally desired. For instance, white light may be combined with a blue light or red light, which may in a vertical configuration mimic the sky and add to well-being. Yet, (advanced) gradients in color and/or color temperature may be possible.

As indicated above, in embodiments the invention provides a light generating system comprising a lighting arrangement, wherein the lighting arrangement may comprise a lightguide body, a first light generating device, and a second light generating device. In yet a further aspect, however, the invention also provides the lighting arrangement comprising the lightguide body, the first light generating device, and the second light generating device, as such. The arrangement, and embodiments thereof, is (are) herein further explained in the context of the light generating system.

The lighting arrangement comprises a lightguide body. Instead of the term "lightguide body" also the term "waveguide body" may be applied. Further, instead of the term "lightguide body", also the terms "lightguide" or "waveguide" may be applied.

Assuming three orthogonal cross-sections, especially at least one of the cross-section is not circular. **In** specific embodiments, the lightguide body may comprise a first face and one or more side faces configured under an angle with the first face. Especially, the lightguide body may comprise a first face, a second face, and one or more side faces bridging the first face and the second face. The angle between the one or more side faces and the first face may e.g. be selected from the range of 45-135°, though other angles may also be possible. Especially, the angle of the one or more side faces with the first face may be about 90°. Hence, especially the one or more side faces may be configured orthogonal to the first face and the second face.

The first face may be planar or may be curved. However, a radius of the curvature of the first face may be substantially larger than a length, width, height, or a diameter of the lightguide body, such as larger than 10 times a length or larger than 10 times a diameter. Especially, the first face may be substantially planar.

Alternatively or additionally, the second face may (also) be planar or may be curved. However, a radius of the curvature of the second face may be substantially larger than a length, width, height, or a diameter of the lightguide body, such as larger than 10 times a length or larger than 10 times a diameter. Especially, the second face may (also) be substantially planar.

Especially, the waveguide may have the shape of a plate, having a length, a width, or a diameter, which may essentially be larger than a height. Hence, the waveguide may have a first dimension, defined as a circular equivalent diameter, and a second dimension, perpendicular thereto, and especially defined as a height, wherein the first dimension may be at least 2 times, like at least 5, times, such as at least 10 times larger than the second dimension. Would the waveguide have a length and a width, each may be at least 2 times, like at least 5, times, such as at least 10 times larger than the height.

In embodiments, the circular equivalent diameter may be selected from the range of 0.1-2 m, more especially 0.2-1.5 m, most especially 0.3-1 m. Further, in embodiments, the height may be selected from the range of 0.1-3 cm, more especially 0.2-2 cm, most especially 0.3-1 cm.

In specific embodiments, the length may be selected from the range of 0.1-2 m, more especially 0.2-1.5 m, most especially 0.3-1 m. In specific embodiments, a width may be selected from the range of 0.1-2 m, more especially 0.2-1.5 m, most especially 0.3-1 m.

In specific embodiments, the height may be selected from the range of 0.1-3 cm, more especially 0.2-2 cm, most especially 0.3-1 cm.

The equivalent circular diameter (or ECD) (or "circular equivalent diameter") of an (irregularly shaped) two-dimensional shape is the diameter of a circle of equivalent area. For instance, the equivalent circular diameter of a square with side a is $2*a*SQRT(1/\pi)$. For a circle, the diameter is the same as the equivalent circular diameter. Would a circle in an xy-plane with a diameter D be distorted to any other shape (in the xy-plane), without changing the area size, than the equivalent circular diameter of that shape would be D.

In embodiments, the waveguide may have a (first) cross-sectional shape selected from a rectangular shape, a circular shape, a hexagonal shape, an octagonal shape, and an oval shape. Especially, the waveguide may have a rectangular ((first) cross-sectional) shape. However, other shapes may also be possible, such as rectangular with rounded corners, oval, etc. In specific embodiments rectangular may be square; in other embodiments rectangular may be non-square. In embodiments, the waveguide may have a second cross-sectional shape, configured perpendicular to the first cross-sectional shape, which is rectangular. Hence, in embodiments the waveguide may have the shape of a cube, a cuboid, a hexagonal prism, or a cylinder; though other shapes are not excluded, such as octagonal prism. A cube and a cuboid may have four side faces and a hexagonal prism may have six side faces. A cylinder may have a single side face.

The lightguide body comprises a light transmissive material.

Especially, the material has a light transmission in the range of 50-100 %, especially in the range of 70-100%, for light having a wavelength selected from the visible wavelength range. Herein, the term "visible light" especially relates to light having a wavelength selected from the range of 380-780 nm.

The transmission (or light permeability) can be determined by providing light at a specific wavelength with a first intensity to the light transmissive material under perpendicular radiation and relating the intensity of the light at that wavelength measured after transmission through the material, to the first intensity of the light provided at that specific wavelength to the material (see also E-208 and E-406 of the CRC Handbook of Chemistry and Physics, 69th edition, 1088-1989).

In specific embodiments, a material may be considered transmissive when the transmission of the radiation at a wavelength or in a wavelength range, especially at a wavelength or in a wavelength range of radiation generated by a source of radiation as herein described, through a 1 mm thick layer of the material, especially even through a 5 mm thick layer of the material, under perpendicular irradiation with said radiation is at least about 20%, such as at least 40%, like at least 60%, such as especially at least 80%, such as at least about 85%, such as even at least about 90%.

The light transmissive material has light guiding or wave guiding properties. Hence, the light transmissive material is herein also indicated as waveguide material or light guide material. The light transmissive material will in general have (some) transmission of one or more of (N)UV, visible and (N)IR radiation, such as in embodiments at least visible light, in a direction perpendicular to the length of the light transmissive material. Without the activator (dopant) such as trivalent cerium, the internal transmission in the visible might be close to 100%.

The transmission of the light transmissive material (as such) for one or more luminescence wavelengths may be at least 80%/cm, such as at least 90%/cm, even more especially at least 95%/cm, such as at least 98%/cm, such as at least 99%/cm. This implies that e.g. a 1 cm$^3$ cubic shaped piece of light transmissive material, under perpendicular irradiation of radiation having a selected luminescence wavelength (such as a wavelength corresponding to an emission maximum of the luminescence of the luminescent material of the light transmissive material), will have a transmission of at least 95%.

Herein, values for transmission especially refer to transmission without taking into account Fresnel losses at interfaces (with e.g. air). Hence, the term "transmission" especially refers to the internal transmission. The internal transmission may e.g. be determined by measuring the transmission of two or more bodies having a different width over which the transmission is measured. Then, based on such measurements the contribution of Fresnel reflection losses and (consequently) the internal transmission can be determined. Hence, especially, the values for transmission indicated herein, disregard Fresnel losses.

In embodiments, an anti-reflection coating may be applied to the luminescent body, such as to suppress Fresnel reflection losses (during the light incoupling process).

In addition to a high transmission for the wavelength(s) of interest, also the scattering for the wavelength(s) may especially be low. Hence, the mean free path for the wavelength of interest only taking into account scattering effects (thus not taking into account possible absorption (which should be low anyhow in view of the high transmission), may be at least 0.5 times the length of the body, such as at least the length of the body, like at least twice the length of the body. For instance, in embodiments the mean free path only taking into account scattering effects may be at least 5 mm, such as at least 10 mm. The wavelength of interest may especially be the wavelength at maximum emission of the luminescence of the luminescent material. The term "mean free path" is especially the average distance a ray will travel before experiencing a scattering event that will change its propagation direction.

In embodiments, the element comprising the light transmissive material may essentially consist of the light transmissive material. In specific embodiments, the element comprising the light transmissive material may be a light transparent element.

Especially, the light transmissive element, such as the light transparent element, may in embodiments have an absorption length and/or a scatter length of at least the length (or thickness) of the light transmissive element, such as at least twice the length of the light transmissive element. The absorption length may be defined as the length over which the intensity of the light along a propagation direction due to absorption drops with 1/e. Likewise, the scatter length may be defined as the length along a propagation direction along which light is lost due to scattering and drops thereby with a factor 1/e. Here, the length may thus especially refer to the distance between a primary face and a secondary face of the light transmissive element, with the light transmissive material configured between the primary face and the secondary face. Here, the primary face may be the first face and the secondary face may be the second face.

In specific embodiments, the light transmissive material of the lightguide body may comprise one or more materials selected from the group consisting of a transmissive organic material, such as selected from the group consisting of PE (polyethylene), PP (polypropylene), PEN (polyethylene napthalate), PC (polycarbonate), polyurethanes (PU), polymethylacrylate (PMA), polymethylmethacrylate (PMMA) (Plexiglas or Perspex), polymethacrylimide (PMI), polymethylmethacrylimide (PMMI), styrene acrylonitrile resin (SAN), cellulose acetate butyrate (CAB), silicone, polyvinylchloride (PVC), polyethylene terephthalate (PET), including in an embodiment (PETG) (glycol modified polyethylene terephthalate), PDMS (polydimethylsiloxane), and COC (cyclo olefin copolymer). Especially, the light transmissive material may comprise an aromatic polyester, or a copolymer thereof, such as e.g. one or more of polycarbonate (PC), poly (methyl)methacrylate (P(M)MA), polyglycolide or polyglycolic acid (PGA), polylactic acid (PLA), polycaprolactone (PCL), polyethylene adipate (PEA), polyhydroxy alkanoate (PHA), polyhydroxy butyrate (PHB), poly(3-hydroxybutyrate-co-3-hydroxyvalerate) (PHBV), polyethylene terephthalate (PET), polybutylene terephthalate (PBT), polytrimethylene terephthalate (PTT), polyethylene naphthalate (PEN). Especially, the light transmissive material may comprise polyethylene terephthalate (PET). Hence, the light transmissive material is especially a polymeric light transmissive material. However, in another embodiment the light transmissive material may comprise an inorganic material. Especially, the inorganic light transmissive material may be selected from the group consisting of glasses, (fused) quartz, transmissive ceramic materials, and silicones. Also hybrid materials, comprising both inorganic and organic parts may be applied. Especially, the light transmissive material comprises one or more of PMMA, transparent PC, or glass.

Further, the lighting arrangement may comprise a first light generating device, and a second light generating device. First some general aspects in relation to light generating devices are discussed below.

A light generating device may especially be configured to generate device light. Especially, the light generating device may comprise a light source. The light source may especially configured to generate light source light. In embodiments, the device light may essentially consist of the device light. In other embodiments, the device light may essentially consist of converted light source light. In yet other embodiments, the device light may comprise (unconverted) light source light and converted light source light. Light source light may be converted with a luminescent material into luminescent material light and/or with an upconverter into upconverted light (see also below). The term "light generating device" may also refer to a plurality of light generating devices which may provide device light having essentially the same spectral power distributions. In specific embodiments, the term "light generating device" may also refer to a plurality of light generating devices which may provide device light having different spectral power distributions. Especially, the spectral power distribution of the first device light and the second device light may differ; see further also below.

The term "light source" may in principle relate to any light source known in the art. It may be a conventional (tungsten) light bulb, a low pressure mercury lamp, a high pressure mercury lamp, a fluorescent lamp, a LED (light emissive diode). In a specific embodiment, the light source comprises a solid state LED light source (such as a LED or laser diode (or "diode laser")). The term "light source" may also relate to a plurality of light sources, such as 2-2000 (solid state) LED light sources. Hence, the term LED may also refer to a plurality of LEDs. Further, the term "light source" may in embodiments also refer to a so-called chips-on-board (COB) light source. The term "COB" especially refers to LED chips in the form of a semiconductor chip that is neither encased nor connected but directly mounted onto a substrate, such as a PCB. Hence, a plurality of light emitting semiconductor light source may be configured on the same substrate. In embodiments, a COB is a multi LED chip configured together as a single lighting module.

The light source may have a light escape surface. Referring to conventional light sources such as light bulbs or fluorescent lamps, it may be outer surface of the glass or quartz envelope. For LED's it may for instance be the LED die, or when a resin is applied to the LED die, the outer surface of the resin. In principle, it may also be the terminal end of a fiber. The term escape surface especially relates to that part of the light source, where the light actually leaves or escapes from the light source. The light source is configured to provide a beam of light. This beam of light (thus) escapes from the light exit surface of the light source.

Likewise, a light generating device may comprise a light escape surface, such as an end window. Further, likewise a light generating system may comprise a light escape surface, such as an end window.

The term "light source" may refer to a semiconductor light-emitting device, such as a light emitting diode (LEDs), a resonant cavity light emitting diode (RCLED), a vertical cavity laser diode (VCSELs), an edge emitting laser, etc... The term "light source" may also refer to an organic light-emitting diode (OLED), such as a passive-matrix (PMOLED) or an active-matrix (AMOLED). In a specific embodiment, the light source comprises a solid-state light source (such as a LED or laser diode). In an embodiment, the light source comprises a LED (light emitting diode). The terms "light source" or "solid state light source" may also refer to a superluminescent diode (SLED).

The term LED may also refer to a plurality of LEDs.

The term "light source" may also relate to a plurality of (essentially identical (or different)) light sources, such as 2-2000 solid state light sources. In embodiments, the light source may comprise one or more micro-optical elements (array of micro lenses) downstream of a single solid-state light source, such as a LED, or downstream of a plurality of solid-state light sources (i.e. e.g. shared by multiple LEDs). In embodiments, the light source may comprise a LED with on-chip optics. In embodiments, the light source comprises a pixelated single LEDs (with or without optics) (offering in embodiments on-chip beam steering).

In embodiments, the light source may be configured to provide primary radiation, which is used as such, such as e.g. a blue light source, like a blue LED, or a green light source, such as a green LED, and a red light source, such as a red LED. Such LEDs, which may not comprise a luminescent material ("phosphor") may be indicated as direct color LEDs.

In other embodiments, however, the light source may be configured to provide primary radiation and part of the primary radiation is converted into secondary radiation. Secondary radiation may be based on conversion by a luminescent material. The secondary radiation may therefore also be indicated as luminescent material radiation. The luminescent material may in embodiments be comprised by the light source, such as a LED with a luminescent material layer or dome comprising luminescent material. Such LEDs may be indicated as phosphor converted LEDs or PC LEDs (phosphor converted LEDs). In other embodiments, the luminescent material may be configured at some distance ("remote") from the light source, such as a LED with a luminescent material layer not in physical contact with a die of the LED. Hence, in specific embodiments the light source may be a light source that during operation emits at least light at wavelength selected from the range of 380-470 nm. However, other wavelengths may also be possible. This light may partially be used by the luminescent material.

In embodiments, the light generating device may comprise a luminescent material. In embodiments, the light generating device may comprise a PC LED. In other embodiments, the light generating device may comprise a direct LED (i.e. no phosphor). In embodiments, the light generating device may comprise a laser device, like a laser diode. In embodiments, the light generating device may comprise a superluminescent diode. Hence, in specific embodiments, the light source may be selected from the group of laser diodes and superluminescent diodes. In other embodiments, the light source may comprise an LED.

The light source may especially be configured to generate light source light having an optical axis (O), (a beam shape,) and a spectral power distribution. The light source light may in embodiments comprise one or more bands, having band widths as known for lasers

The term "light source" may (thus) refer to a light generating element as such, like e.g. a solid state light source, or e.g. to a package of the light generating element, such as a solid state light source, and one or more of a luminescent material comprising element and (other) optics, like a lens, a collimator. A light converter element ("converter element" or "converter") may comprise a luminescent material comprising element. For instance, a solid state light source as such, like a blue LED, is a light source. A combination of a solid state light source (as light generating element) and a light converter element, such as a blue LED and a light converter element, optically coupled to the solid state light source, may also be a light source (but may also be indicated as light generating device). Hence, a white LED is a light source (but may e.g. also be indicated as (white) light generating device).

The term "light source" herein may also refer to a light source comprising a solid state light source, such as an LED or a laser diode or a superluminescent diode.

The "term light source" may (thus) in embodiments also refer to a light source that is (also) based on conversion of light, such as a light source in combination with a luminescent converter material. Hence, the term "light source" may also refer to a combination of a LED with a luminescent material configured to convert at least part of the LED radiation, or to a combination of a (diode) laser with a luminescent material configured to convert at least part of the (diode) laser radiation.

In embodiments, the term "light source" may also refer to a combination of a light source, like a LED, and an optical filter, which may change the spectral power distribution of the light generated by the light source. Especially, the "term light generating device" may be used to address a light source and further (optical components), like an optical filter and/or a beam shaping element, etc.

The phrases "different light sources" or "a plurality of different light sources", and similar phrases, may in embodiments refer to a plurality of solid-state light sources selected from at least two different bins. Likewise, the phrases "identical light sources" or "a plurality of same light sources", and similar phrases, may in embodiments refer to a plurality of solid-state light sources selected from the same bin.

The term "solid state light source", or "solid state material light source", and similar terms, may especially refer to semiconductor light sources, such as a light emitting diode (LED), a diode laser, or a superluminescent diode.

In embodiments, the first light generating device may be configured to generate first radiation having a first spectral power distribution having wavelength in one or more of UV and visible. Further, in embodiments the second light generating device may be configured to generate second radiation having a second spectral power distribution having a wavelength in one or more of UV and visible.

The terms "visible", "visible light" or "visible emission" and similar terms refer to light having one or more wavelengths in the range of about 380-780 nm. Herein, UV may especially refer to a wavelength selected from the range of 190-380 nm, such as 200-380 nm, though smaller wavelengths are herein not excluded for UV radiation.

The terms "light" and "radiation" are herein interchangeably used, unless clear from the context that the term "light" only refers to visible light. The terms "light" and "radiation" may thus refer to UV radiation, visible light, and IR radiation. In specific embodiments, especially for lighting applications, the terms "light" and "radiation" refer to (at least) visible light.

The terms "violet light" or "violet emission" especially relates to light having a wavelength in the range of about 380-440 nm. The terms "blue light" or "blue emission" especially relates to light having a wavelength in the range of about 440-495 nm (including some violet and cyan hues). The terms "green light" or "green emission" especially relate to light having a wavelength in the range of about 495-570 nm. The terms "yellow light" or "yellow emission" especially relate to light having a wavelength in the range of about 570-590 nm. The terms "orange light" or "orange emission" especially relate to light having a wavelength in the range of about 590-620 nm. The terms "red light" or "red emission" especially relate to light having a wavelength in the range of about 620-780 nm. The term "pink light" or "pink emission" refers to light having a blue and a red component. The term "cyan" may refer to one or more wavelengths selected from the range of about 490-520 nm. The term "amber" may refer to one or more wavelengths selected from the range of about 585-605 nm, such as about 590-600 nm.

The phrase "light having one or more wavelengths in a wavelength range" and similar phrases may especially indicate that the indicated light (or radiation) has a spectral power distribution with at least intensity or intensities at these one or more wavelengths in the indicate wavelength range. For instance, a blue emitting solid state light source will have a spectral power distribution with intensities at one or more wavelengths in the 440-495 nm wavelength range.

In embodiments, one or both of the light generating devices may be configured to generate white light. The term "white light", and similar terms, herein, is known to the person skilled in the art. It may especially relate to light having a correlated color temperature (CCT) between about 1800 K and 20000 K, such as between 2000 and 20000 K, especially 2700-20000 K, for general lighting especially in the range of about 2000-7000 K, such as in the range of 2700 K and 6500 K. In embodiments, e.g. for backlighting purposes, or for other purposes, the correlated color temperature (CCT) may especially be in the range of about 7000 K and 20000 K. Yet further, in embodiments the correlated color temperature (CCT) is especially within about 15 SDCM (standard deviation of color matching) from the BBL (black body locus), especially within about 10 SDCM from the BBL, even more especially within about 5 SDCM from the BBL.

In specific embodiments, the correlated color temperature (CCT) may be selected from the range of 6000-12000 K, like selected from the range of 7000-12000 K, like at least 8000 K.

Yet further, in embodiments the correlated color temperature (CCT) may be selected from the range of 6000-12000 K, like selected from the range of 7000-12000 K, in combination with a CRI of at least 70.

In (other) embodiments, one or both of the light generating devices may be configured to generate UV radiation. UV radiation and/or the low wavelength range part of the visible radiation may have disinfection properties.

UV light has been used for disinfection for over 100 years. Wavelengths between about 190 nm and 300 nm may be strongly absorbed by nucleic acids, which may result in defects in an organism's genome. This may be desired for inactivating (killing), bacteria and viruses, but may also have undesired side effects for humans. Therefore, the selection of wavelength of radiation, intensity of radiation and duration of irradiation may be limited in environments where people may reside such as offices, public transport, cinema's, restaurants, shops, etc., thus limiting the disinfection capacity. Especially in such environments, additional measures of disinfection may be advantageous to prevent the spread of bacteria and viruses such as influenza or novel (corona) viruses like COVID-19, SARS and MERS.

It appears desirable to produce systems, that provide alternative ways for air treatment, such as disinfection. Further, existing systems for disinfection may not easily be implemented in existing infrastructure, such as in existing buildings like offices, hospitality areas, etc. and/or may not easily be able to serve larger spaces. This may again increase the risk of contamination. Further, incorporation in HVAC systems may not lead to desirable effects and appears to be relatively complex. Further, existing systems may not be efficient, or may be relatively bulky, and may also not easily be incorporated in functional devices, such as e.g. luminaires.

Other disinfection systems may use one or more anti-microbial and/or antiviral means to disinfect a space or an object. Examples of such means may be chemical agents which may raise concerns. For instance, the chemical agents may also be harmful for people and pets.

In embodiments, the disinfecting light, may especially comprise ultraviolet (UV) radiation (and/or optionally violet radiation), i.e., the light may comprise a wavelength selected from the ultraviolet wavelength range (and/or optionally the violet wavelength range). However, other wavelengths are herein not excluded. The ultraviolet wavelength range is defined as light in a wavelength range from 100 to 380 nm and can be divided into different types of UV light / UV wavelength ranges (Table 1). Different UV wavelengths of radiation may have different properties and thus may have different compatibility with human presence and may have different effects when used for disinfection (Table 1).

Table 1: Properties of different types of UV, violet, and NIR wavelength light

| Name | Short name | Wavelength (nm) | (Relative) sterilization effectiveness | | Safe Radiation | Vitamin D generation | Ozone generation |
|---|---|---|---|---|---|---|---|
| | | | Bacteria | Viruses | | | |
| Near Infrared (deep red) | NIR | 780-950 | + | +/- | +++ | | |
| Violet | V | 380-420 | +/- | - | + | | |
| Ultraviolet A | UV-A | 315-380 | + | - | + | | |
| Ultraviolet B | UV-B | 280-315 | + | +/- | +/- | + | |
| Near ultraviolet C | Near UV-C | 230-280 | ++ | ++ | - | | |
| Far ultraviolet C | Far UV-C | 190-230 | +++ | +++ | + | | +/- |
| Extreme ultraviolet C | Extreme UV-C | 100-190 | +++ | +++ | - | | + |

Each UV type / wavelength range may have different benefits and/or drawbacks. Relevant aspects may be (relative) sterilization effectiveness, safety (regarding radiation), and ozone production (as result of its radiation). Depending on an application a specific type of UV light or a specific combination of UV light types may be selected and provides superior performance over other types of UV light. UV-A may be (relatively) safe and may inactivate (kill) bacteria, but may be less effective in inactivating (killing) viruses. UV-B may be (relatively) safe when a low dose (i.e. low exposure time and/or low intensity) is used, may inactivate (kill) bacteria, and may be moderately effective in inactivating (killing) viruses. UV-B may also have the additional benefit that it can be used effectively in the production of vitamin D in a skin of a person or animal. Near UV-C may be relatively unsafe, but may effectively inactivating, especially kill bacteria and viruses. Far UV-C may also be effective in inactivating (killing) bacteria and viruses, but may be (relatively to other UV-C wavelength ranges) (rather) safe. Far-UV light may generate some ozone which may be harmful for human beings and animals. Extreme UV-C may also be effective in inactivating (killing) bacteria and viruses, but may be relatively unsafe. Extreme UV-C may generate ozone which may be undesired when exposed to human beings or animals. In some application ozone may be desired and may contribute to disinfection, but then its shielding from humans and animals may be desired. Hence, in the table "+" for ozone production especially implies that ozone is produced which may be useful for disinfection applications, but may be harmful for humans / animals when they are exposed to it. Hence, in many applications this "+" may actually be undesired while in others, it may be desired. The types of light indicated in above table may in embodiments be used to sanitize air and/or surfaces.

The terms "inactivating" and "killing" with respect to a virus may herein especially refer to damaging the virus in such a way that the virus can no longer infect and/or reproduce in a host cell, i.e., the virus may be (essentially) harmless after inactivation or killing.

Hence, in embodiments, the light may comprise a wavelength in the UV-A range. In further embodiments, the light may comprise a wavelength in the UV-B range. In further embodiments, the light may comprise a wavelength in the Near UV-C range. In further embodiments, the light may comprise a wavelength in the Far UV-C range. In further embodiments, the light may comprise a wavelength in the extreme UV-C range. The Near UV-C, the Far UV-C and the extreme UV-C ranges may herein also collectively be referred to as the UV-C range. Hence, in embodiments, the light may comprise a wavelength in the UV-C range. In other embodiments, the light may comprise violet radiation.

As indicated above, the first spectral power distribution and the second spectral power distribution differ.

In specific embodiments, colors or color points of a first type of light and a second type of light (here in embodiments the first device light and the second device light) may be different when the respective color points of the first type of light and the second type of light differ with at least 0.01 for u' and/or with at least 0.01 for v', even more especially at least 0.02 for u' and/or with at least 0.02 for v'. In yet more specific embodiments, the respective color points of first type of light and the second type of light may differ with at least 0.03 for u' and/or with at least 0.03 for v'. Here, u' and v' are color coordinate of the light in the CIE 1976 UCS (uniform chromaticity scale) diagram.

Spectral power distributions of different sources of light having centroid wavelengths differing least 10 nm, such as at least 20 nm, or even at least 30 nm may be considered different spectral power distributions, e.g. different colors. In general, the differences in centroid wavelengths will not be larger than about 400 nm, such as not more 350 nm. However, in the current invention it may also be possible to combine red light and UV radiation as types of first device light or second device light. Hence, the differences in centroid wavelengths may even be up to about 650 nm, such as up to about 600 nm, like up to about 550 nm.

As one or both of the first device light and the second device light may comprise UV radiation, the difference in color point may not easily be used to indicate differences. Hence, in such embodiments the difference in centroid wavelength may especially be used.

The term "centroid wavelength", also indicated as $\lambda c$, is known in the art, and refers to the wavelength value where half of the light energy is at shorter and half the energy is at longer wavelengths; the value is stated in nanometers (nm). It is the wavelength that divides the integral of a spectral power distribution into two equal parts as expressed by the formula $\lambda c = \Sigma \lambda * I(\lambda) / (\Sigma I(\lambda))$, where the summation is over the wavelength range of interest, and $I(\lambda)$ is the spectral energy density (i.e. the integration of the product of the wavelength and the intensity over the emission band normalized to the integrated intensity). The centroid wavelength may e.g. be determined at operation conditions.

Further, the lightguide body may comprise light outcoupling structures. In this way, device light coupled into the lightguide via a side face, may be coupled out from the lightguide via such light outcoupling structure and/or at such light outcoupling structure.

Hence, the waveguide may comprise light outcoupling elements. This may include one or more of elements embedded by the light transmissive material, and elements at a face of the waveguide (such as at one or more of the first face and the second face).

The light outcouple elements may comprise particles embedded in the light transmissive material of the waveguide. Such particles may be scattering particles (like e.g. comprising one or more of $Al_2O_3$, $BaSO_4$ and $TiO_2$). The light outcouple elements may comprise elements at one or more faces of the waveguide, like indentations, scratches, grooves, dots of material, light scattering structures (in optical contact with one of the faces), etc. etc.

Light outcouple elements are for instance described in WO9922268, WO2012059866, WO2018041470, and WO03027569. The light outcouple elements may be configured as regular pattern of light outcouple elements.

The light outcouple elements may especially be configured to couple the device light out from the waveguide, such that an intensity of the device light may escape from the waveguide relatively evenly distributed over the waveguide. **In** specific embodiments, however, this may essentially only apply to one of the first device radiation and the second device radiation; see further also below.

Radiation of the first light generating device and/or second light generating device may be coupled into the lightguide body via the one or more side faces. Hence, the one or more side faces may be configured in a radiation receiving relationship with the first light generating devices and the second light generating devices. Then, the first device radiation and/or the second device radiation may propagate through the lightguide body. Due to due to total internal reflection, a part of the incoupled first device radiation and/or the second device radiation may propagate through the lightguide body until the radiation is absorbed or outcoupled.

To facilitate outcoupling of the radiation, and especially to facilitate outcoupling at the right positions, such that a desirable intensity distribution may be obtained, the light outcoupling structures may be available.

Hence, in embodiments the first light generating device, the second light generating device, and the lightguide body may be configured such that at least part of the first radiation and the second radiation is coupled into the lightguide body via the one or more side faces, and at least part of the incoupled first radiation and second radiation is coupled out from the lightguide body via the first face.

Hence, the first light generating device and the second light generating device are configured upstream of the one or more side faces.

The terms "upstream" and "downstream" relate to an arrangement of items or features relative to the propagation of the light from a light generating means (here the especially the light source), wherein relative to a first position within a beam of light from the light generating means, a second position in the beam of light closer to the light generating means is "upstream", and a third position within the beam of light further away from the light generating means is "downstream".

As can be derived from the above, it may be desirable that for one type of light the outcoupling from the first face may essentially be spatially constant. This may lead to minimum in intensity fluctuations over the first face. This may be desirable for evenly providing radiation in a space or on an object. However, as can be derived from the above, it may be desirable that for another type of light the outcoupling from the first face may be inhomogeneous. This may lead to one or more intensity changes over the first face. This may be desirable for spatially more selectively providing radiation in a space or on an object, and/or for providing specific effects, like color effects (see e.g. also above).

Especially, the intensity changes over the first face may be gradual. Gradual may in embodiments imply e.g. a local minim and a local maximum and in between the local minimum and the local maximum at least one position with a value between those of the local maximum and in between the local minimum. The gradual change may be a step wise change. The gradual change may have a variation with a substantially linear increase or decrease of the intensity, or with sinusoidal change of the intensity, or with an exponential increase or decrease of the intensity, or with a logarithmic increase or decrease of the intensity. Other gradual changes may also be possible.

In specific embodiments, the first light generating device, the second light generating device, and the light outcoupling structures are configured such that a ratio of a first radiant flux ("first flux") of the outcoupled first radiation and a second radiant flux ("second flux") of the outcoupled second radiation (gradually) varies over the first face.

In embodiments, the gradual variation may be obtained with the first radiation having a substantially even spatial distribution of the radiant flux ("flux"), and with the second radiation having an increasing or decreasing flux, especially in dependence of a distance from the second light generating device.

A substantially even spatial distribution of the flux may be a distribution wherein the radiant flux has an average radiant flux value, based on an averaging over the first face. Further, for a substantially even spatial distribution of the flux may apply that less than 20% of a surface area may have local radiant flux values differing more than 20% of the average radiant flux value, such as less than 10% of a surface area.

An uneven distribution of the radiation, such as may e.g. be the case for the second radiation emanating from the first face, may apply that more than 30% of a surface area may have local radiant flux values differing more than 20% of the average radiant flux value, such as more than 40% of a surface area, like at least 50%.

In alternative embodiments, a substantially even spatial distribution of the flux may be a distribution wherein the luminous flux has an average luminous flux value, based on an averaging over the first face. Further, for a substantially even spatial distribution of the flux may apply that less than 20% of a surface area may have local luminous flux values differing more than 20% of the average luminous flux value, such as less than 10% of a surface area. Likewise, an uneven distribution of the radiation, such as may e.g. be the case for the second radiation emanating from the first face, may apply that more than 30% of a surface area may have local luminous flux values differing more than 20% of the average luminous flux value, such as more than 40% of a surface area, like at least 50%.

Further, in embodiments the light generating system may be configured to generate system light comprising one or more of (i) at least part of the outcoupled first radiation and (ii) at least part of the outcoupled second radiation. Herein, the phrase "at least part of the outcoupled first radiation and (ii) at least part of the outcoupled second radiation" is used, as it is herein not excluded that downstream the first face an optical filter may be configured, which may have a wavelength dependent transmission and/or reflection. **In** specific embodiments, the system light may comprise one or more of (i) the outcoupled first radiation and (ii) the outcoupled second radiation. Alternatively or additionally, downstream of the first face a diffuser may be configured. Other optical elements may in embodiments also be configured downstream of the first face. Yet, the first face may also be an end window, or an end window face, of the system.

In embodiments, the lightguide body may have a first face and a second face which may be substantially parallel. Radiation of the first light generating device and/or the second light generating device may be coupled into the lightguide body via the one or more side faces.

When the first radiation is coupled in via a first side face part, and the light outcoupling structures are configured such, that the first radiation is coupled out substantially homogenous over the first face, in embodiments second radiation that is coupled in via the side face having an optical axis with the optical axis of the first radiation which is not 0° or 360°, may lead to a less even distribution of the outcoupled second radiation from the first face. For instance, this may apply when the optical axes have a mutual angle of 180°.

Especially, the term "optical axis" may be defined as an imaginary line that defines the path along which light propagates through a system starting from the light generating element, here especially the light source. Especially, the optical axis may coincide with the direction of the light with the highest radiant flux.

Hence, in specific embodiments the first radiation may have a first optical axis (O1) and the second radiation may have a second optical axis (O2); wherein the first optical axis (O1) and the second optical axis (O2) may have a mutual angle ($\alpha$1) which is unequal to 0° and 360°. Especially, in embodiments the mutual angle ($\alpha$1) may be selected from the range of 135-225°, more especially from the range of 165-185°, such as about 180°.

As can be derived from the above, in embodiments the first light generating device, the second light generating device, and the light outcoupling structures may (thus) be configured such that there is a homogeneous distribution of the first radiant flux over the first face of the outcoupled first radiation and an inhomogeneous distribution of the second radiation flux over the first face.

In (other) embodiments, the first light generating device, the second light generating device, and the light outcoupling structures may be configured such that there is a homogeneous distribution of the first luminous flux over the first face of the outcoupled first radiation and an inhomogeneous distribution of the second luminous flux over the first face.

As indicated above, a lightguide body having a circular cross-section may have a single side face. Nevertheless, such single side face may be divided into several (virtual) parts, such as sets of opposite parts, or n parts at or between 360°/n positions, which may be indicated as side face parts. A cuboid may have four side faces. These four side faces may also be indicated as side face parts.

In embodiments, as also indicated above, the first light generating device may irradiate a first part, with a first optical axis, and at an angle not being 0° or 360°, an optical axis of the second radiation may be configured. Hence, assuming a circular cross-section, as indicated above, the mutual angle between the optical axes may be about 180°, though other values are herein not excluded. Further, assuming e.g. a cuboid, the first light generating device and the second light generating device may irradiate opposite side face parts.

Hence, in specific embodiments the one or more side faces may comprise a first side face part and a second side face part configured either (i) under an angle larger than 0° or smaller than 180° or (ii) opposite of each other with the lightguide body configured in between; wherein the first light generating device is configured to irradiate the first side face part, and wherein the second light generating device is configured to irradiate the second side face part.

It appears that with increasing distance from the first light generating device, outcoupling may have to be more facilitated. This may be due to the aspect of total internal reflection, as the rays entering the lightguide body at smaller angles relative to the first face and/or second face, may have a larger chance on total internal reflection than rays entering the lightguide body at larger angles relative to the first face and/or second face, which may even directly be coupled out. Hence, it appears useful when with increasing distance from the first light generating device, one or more dimensions of the light outcoupling structures increase, and/or with increasing distance from the first light generating device, a density of the light outcoupling structures at the first surface increases, and/or with increasing distance from the first light generating device, a concentration of the light outcoupling structures within the lightguide body increases. Therefore, in embodiments one or more of dimensions, density, and concentration of the light outcoupling structures may be selected such that there is a (substantially) homogeneous distribution of the first radiant flux over the first face of the outcoupled first radiation. Further, one or more of dimensions, density, and concentration of the light outcoupling structures may be selected such that there is an inhomogeneous distribution of the second radiant flux over the first face of the outcoupled second radiation.

With the term "dimensions" it may be referred to e.g. diameters of (substantially spherical) particles embedded in the lightguide body. With the term "dimensions" it may also be referred to e.g. one or more of length, width, and height of (non-spherical) particles embedded in the lightguide body. With the term "dimensions" it may also be referred to e.g. width and/or heights and/or length of surface structures at the first surface. With dimensions, it may also be referred to diameter.

Hence, in relation to particles within the lightguide body, e.g. a spatial variation in the dimensions and/or concentration may facilitate a spatially substantial even outcoupling of the first radiation from the first face. In relation to structures at the surface (at the first face and/or second face), e.g. a decrease of the pitch with increasing distance from the first light generating device may facilitate a spatially substantial even outcoupling of the first radiation from the first face.

Therefore, in specific embodiments one or more of the dimensions, density, and concentration of the light outcoupling structures increases with increasing distance from the first light generating device, and one or more of the dimensions, density, and concentration of the light outcoupling structures decreases with increasing distance from the second light generating device.

In embodiments, the first side face part and the second side face part are configured opposite of each other with the lightguide body configured in between. In embodiments, the lightguide body has a cuboid-like structure with a height (H), defined by the first face and a second face, and four side face parts bridging the first face and the second face, and defining a length (L) and a width (W), wherein L>H, W>H, and optionally L≥W. In specific embodiments the first side face part and the second side face part are configured opposite of each other with the lightguide body configured in between, wherein the lightguide body has a cuboid-like structure with a height (H), defined by the first face and a second face, and four side face parts bridging the first face and the second face, and defining a length (L) and a width (W), wherein L>H, W>H, and (optionally) L≥W.

Therefore, in embodiments one or more of the dimensions, density, and concentration of the light outcoupling structures may increase with increasing distance from the first side face part, and one or more of the dimensions, density, and concentration of the light outcoupling structures may decrease with increasing distance from the second side face part.

Herein, the spatial distribution of the (radiant or luminous) flux is especially defined in relation to a distance from the first light generating device (or from the second light generating device), or in relation to a distance from the first side face part or from the second side face part). Note that in a direction perpendicular thereto the spatial distribution of the radiant flux or luminous flux may be substantially even.

Therefore, in embodiments one or more of the dimensions, density, and concentration of the light outcoupling structures may be essentially constant in a direction parallel to the first side face part (and/or the second side face part).

In embodiments, two or more types of light outcoupling structures may be applied. For instance, when using structures having the sizes in the range of the radiation that has to coupled out may have less impact on radiation having other wavelengths. However, also other solutions may be chosen. For instance, the outcoupling structures may form a diffractive structure, especially for either the first radiation or the second radiation.

As mentioned, the light outcoupling structures may comprise a first type of light outcoupling structures and a second type of light outcoupling structures, wherein the first type of light outcoupling structures may more efficiently couple first device radiation out than second device radiation, and the second types of light outcoupling structures may more efficiently couple second device radiation out than first device radiation.

In an embodiment, the first type of light outcoupling structures may more efficiently couple first device radiation out than second device radiation, and the second type of light outcoupling structures may couple out second device radiation and first device radiation about equally efficient.

In examples, the first type of light outcoupling structures may comprises one or more dichroic mirrors and/or one or more photonic crystals, while the second type of outcoupling structures may comprise silver reflective structures or white reflective structures. The silver reflective structures may comprise e.g. aluminium and/or silver flakes in a polymeric binder. The white reflective structures may comprise e.g. Al2O3, BaSO4 and/or TiO2 particles in a polymeric binder.

In embodiments, the first type of light outcoupling structures and/or the second type of light outcoupling structures may comprise one or more dichroic mirrors and/or one or more photonic crystals. For example, the first type of light outcoupling structures may comprises one or more first dichroic mirrors and the second type of light outcoupling structures may comprises one or more second dichroic mirrors, the one or more second dichroic mirrors being different from the one or more first dichroic mirrors. Said one or more first dichroic mirrors may alternatively be a plurality of first dichroic mirrors. Said one or more second dichroic mirrors may alternatively be a plurality of second dichroic mirrors. For example, the first type of light outcoupling structures may comprises first photonic crystals and the second type of light outcoupling structures may comprises second photonic crystals, different from the first photonic crystals.

The term "first light generating device" may also refer to a plurality of (essentially the same) first light generating devices, such as at least four. Alternatively or additionally, the term "second light generating device" may also refer to a plurality of (essentially the same) second light generating devices, such as at least four. In specific embodiments, the light generating system comprises one or more of a plurality of first light generating devices and plurality of second light generating devices. In specific embodiments, two or more first light generating devices may be controlled individually (see also below). In yet other specific embodiments, two or more subsets of each at least a single first light generating device may be controlled individually. Alternatively or additionally, in specific embodiments, two or more second light generating devices may be controlled individually (see also below). In yet other specific embodiments, two or more subsets of each at least a single second light generating device may be controlled individually.

In embodiments, the first radiation is visible radiation. Alternatively or additionally, in embodiments the second radiation is visible radiation. In embodiments, the first radiation is white radiation. Alternatively or additionally, in embodiments the second radiation is white radiation. In embodiments, the first radiation is colored radiation. Alternatively or additionally, in embodiments the second radiation is colored radiation. In embodiments, the first radiation is UV radiation. Alternatively or additionally, in embodiments the second radiation is UV radiation.

In specific embodiments, the first radiation may be white light, and the second radiation may be colored light. In (other) specific embodiments, the first radiation may be white light, and the second radiation may comprise one or more of UV-A, UV-B, and UV-C radiation.

In specific embodiments, the first radiation may be white light, the second radiation may be white light having one or more of a different color point, a different correlated color temperature, and a different Melanopic Daylight Efficacy Ratio (MDER), from the first radiation.

The Melanopic Daylight Efficacy Ratio, abbreviated to "melanopic DER" or "MDER", may be used to indicate the melanopsin active radiation in a flux of the light. In words, the melanopic DER is the ratio of the melanopic efficacy of luminous radiation (for a source), to the melanopic efficacy of luminous radiation for daylight (D65). In formula:

$$\text{melanopic DER} = \gamma_{\text{mel},v}^{\text{D65}} = \left(\frac{\Phi_{\text{mel}}}{\Phi_{\text{v}}}\right) \Big/ \left(\frac{\Phi_{\text{mel}}^{\text{D65}}}{\Phi_{\text{v}}^{\text{D65}}}\right) \qquad (\text{Eq. 1})$$

in which $\Phi_{mel}$ represents the melanopic radiant flux and $\Phi_v$ the luminous flux. In equation 2, the superscript indicates the illuminant, being either the source (no superscript) or daylight (D65). When the source is daylight D65, the melanopic DER equals 1. Further, we have

$$\Phi_{mel} = \int SPD(\lambda)\, s_{mel}(\lambda)\, d\lambda \qquad (\text{Eq. 2})$$

$$\Phi_v = K_m \int SPD(\lambda)\, V(\lambda)\, d\lambda \qquad (\text{Eq. 3})$$

with $SPD(\lambda)$ the spectral power distribution of the source, $s_{mel}(\lambda)$ representing the action spectrum of ipRGCs due to their photopigment melanopsin ( $=m(\lambda)$), and $V(\lambda)$ the photopic luminous efficiency function, $K_m$ is the maximum spectral luminous efficacy of radiation for photopic vision, $K_m = 683\ \text{lm·W}^{-1}$. The $s_{mel}(\lambda)$ and $V(\lambda)$ functions are shown in the Table on page 34 and onwards. The denominator in equation 2 is a constant with the value of 0.001362, hence equation 2 may be simplified to:

$$\text{melanopic DER} = \left(\frac{\Phi_{\text{mel}}}{\Phi_{\text{v}}}\right) \Big/ 0.001362 = 754.03 \left(\frac{\Phi_{\text{mel}}}{\Phi_{\text{v}}}\right) \qquad (\text{Eq. 4})$$

In embodiments, the first radiation may have a first Melanopic Daylight Efficacy Ratio (MDER), and the second radiation may have a second Melanopic Daylight Efficacy Ratio (MDER). Especially, in embodiments the first MDER value and the second MDER value may differ at least 0.1.

In embodiments, the light generating system may further comprise a control system configured to individually control the first light generating device and the second light generating device (or may be functionally coupled to such control system). The control system may especially be configured to control the system light (by controlling the first device radiation and the second device radiation). In specific embodiments, the control system may be configured to individually control two or more (first) sets of each at least one first light generating device. Alternatively or additionally, in specific embodiments, the control system may be configured to individually control two or more (second) sets of each at least one second light generating device.

The term "controlling" and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions from a remote control. In embodiments, the control system may be controlled via an App on a device, such as a portable device, like a Smartphone or I-phone, a tablet, etc.. The device is thus not necessarily coupled to the lighting system, but may be (temporarily) functionally coupled to the lighting system.

Hence, in embodiments the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology.

The system, or apparatus, or device may execute an action in a "mode" or "operation mode" or "mode of operation" or "operational mode". The term "operational mode may also be indicated as "controlling mode". Likewise, in a method an action or stage, or step may be executed in a "mode" or "operation mode" or "mode of operation" or "operational mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, in embodiments a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

Above, the invention has especially be described in relation to radiation escaping from the first face. In general, there may also be a second face, which may be configured opposite of the first face. In relation to escape from first radiation and second radiation from the second face, several embodiments may be possible.

For instance, in embodiments a reflector may be configured downstream of the first face, like a reflective coating. In this way, substantially all first radiation and/or second radiation that might escape from the second face, may be directed back into the lightguide body.

In other embodiments, a wavelength dependent reflector may be configured downstream of the first face, like a wavelength dependent reflective coating. In this way, reflection at this wavelength dependent reflector for the first radiation and the second radiation that might escape from the second face, may differ. When the wavelength dependent reflector is also transmissive for at least part of the first radiation and/or second radiation, the spectral power distribution of system light based on radiation escaping from the second face may differ from the system light based on the radiation escaping from the first face.

In yet other embodiments, outcoupling structures may be available, especially at the second surface, which may facilitate the outcoupling of one or more of the first radiation and the second radiation. Above described embodiments may apply for the system light based on the radiation escaping from the second face. However, above described embodiments may not necessarily apply for the system light based on the radiation escaping from the second face.

Herein, the term "system light" may especially refer to light based on radiation escaping from only the first face, unless indicated otherwise or unless clear from the context.

In embodiments, the light generating system may comprise a plurality of lighting arrangements, such as e.g. 4 or 6, though other numbers may also be possible.

Above embodiments of the invention are sometimes described in relation to the radiation flux. However, in other embodiments (or aspects) instead of the radiant flux, the luminous flux may be applied.

Hence, in an aspect the invention (also) provides a light generating system comprising a lighting arrangement, wherein the lighting arrangement comprises a lightguide body, a first light generating device, and a second light generating device, wherein: (A) the first light generating device is configured to generate first radiation having a first spectral power distribution having wavelength in one or more of UV and visible; the second light generating device is configured to generate second radiation having a second spectral power distribution having a wavelength in one or more of UV and visible; wherein the first spectral power distribution and the second spectral power distribution differ; (B) the lightguide body comprises a first face and one or more side faces configured under an angle with the first face; wherein the lightguide body comprises light outcoupling structures; (C) the first light generating device, the second light generating device, and the lightguide body are configured such that at least part of the first radiation and the second radiation is coupled into the lightguide body via the one or more side faces, and at least part of the incoupled first radiation and second radiation is coupled out from the lightguide body via the first face; (D) the first light generating device, the second light generating device, and the light outcoupling structures are configured such that a ratio of a first luminous flux of the outcoupled first radiation and a second luminous flux of the outcoupled second radiation may (gradually) vary over the first face; and (E) the light generating system is configured to generate system light comprising one or more of (i) at least part of the outcoupled first radiation and (ii) at least part of the outcoupled second radiation.

The light generating system may be part of or may be applied in e.g. office lighting systems, household application systems, shop lighting systems, home lighting systems, accent lighting systems, spot lighting systems, theater lighting systems, fiber-optics application systems, projection systems, self-lit display systems, pixelated display systems, segmented display systems, warning sign systems, medical lighting application systems, indicator sign systems, decorative lighting systems, portable systems, automotive applications, (outdoor) road lighting systems, urban lighting systems, green house lighting systems, horticulture lighting, digital projection, or LCD backlighting. The light generating system (or luminaire) may be part of or may be applied in e.g. optical communication systems or disinfection systems.

In yet a further aspect, the invention also provides a lamp or a luminaire comprising the light generating system as defined herein. The luminaire may further comprise a housing, optical elements, louvres, etc. etc... The lamp or luminaire may further comprise a housing enclosing the light generating system. The lamp or luminaire may comprise a light window in the housing or a housing opening, through which the system light may escape from the housing. In yet a further aspect, the invention also provides a projection device comprising the light generating system as defined herein. Especially, a projection device or "projector" or "image projector" may be an optical device that projects an image (or moving images) onto a surface, such as e.g. a projection screen. The projection device may include one or more light generating systems such as described herein. Hence, in an aspect the invention also provides a light generating device selected from the group of a lamp, a luminaire, a projector device, a disinfection device, a photochemical reactor, and an optical wireless communication device, comprising the light generating system as defined herein. The light generating device may comprise a housing or a carrier, configured to house or support, one or more elements of the light generating system. For instance, in embodiments the light generating device may comprise a housing or a carrier, configured to house or support one or more of the first light generating device(s), the second light generating device(s), and the lightguide body.

BRIEF DESCRIPTION OF THE DRAWINGS

Embodiments of the invention will now be described, by way of example only, with reference to the accompanying schematic drawings in which corresponding reference symbols indicate corresponding parts, and in which:

Fig. 1 schematically depicts some aspects of the light generating system and/or arrangement;
Figs. 2a-2b schematically depict some embodiments; and
Fig. 3 schematically depict some application embodiments.

The schematic drawings are not necessarily to scale.

DETAILED DESCRIPTION OF THE EMBODIMENTS

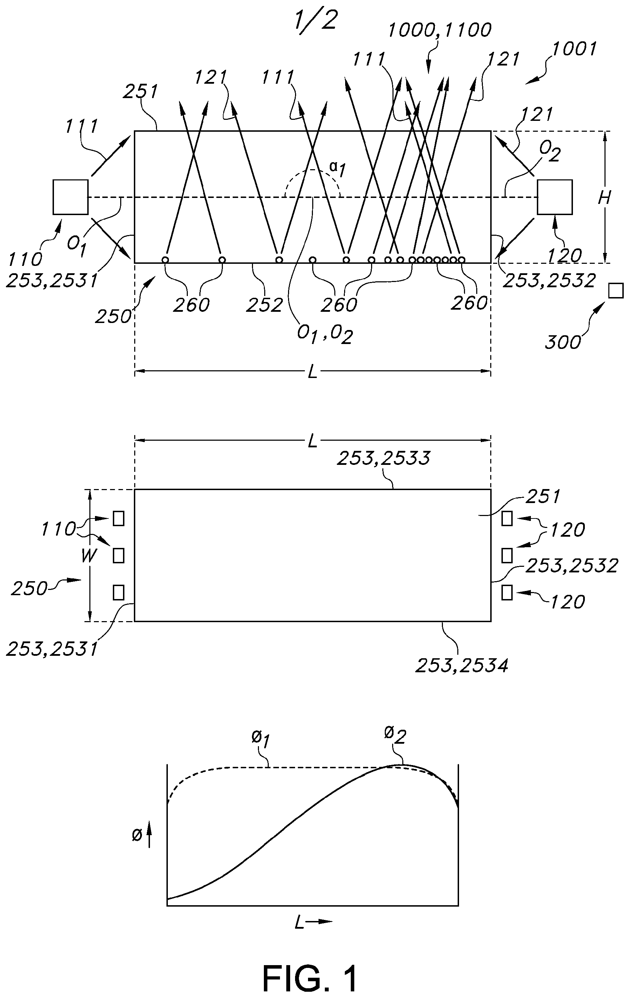

Fig. 1 schematically depicts in the top graphs an embodiments of a light generating system 1000. The light generating system 1000 may comprise a lighting arrangement 1100. The lighting arrangement 1100 may comprise a lightguide body 250, a first light generating device 110, and a second light generating device 120.

The first light generating device 110 may be configured to generate first radiation 111 having a first spectral power distribution having wavelength in one or more of UV and visible. The second light generating device 120 may be configured to generate second radiation 121 having a second spectral power distribution having a wavelength in one or more of UV and visible. The first spectral power distribution and the second spectral power distribution may differ.

The lightguide body 250 may comprise a first face 251 and one or more side faces 253 configured under an angle with the first face. The lightguide body 250 may comprise light outcoupling structures 260. Referring to Fig. 1, in this schematically depicted embodiment the angle is 90°.

The first light generating device 110, the second light generating device 120, and the lightguide body 250 may be configured such that at least part of the first radiation 111 and the second radiation 121 may be coupled into the lightguide body 250 via the one or more side faces 253, and at least part of the incoupled first radiation 111 and second radiation 121 may be coupled out from the lightguide body 250 via the first face 251.

The first light generating device 110, the second light generating device 120, and the light outcoupling structures 260 may be configured such that a ratio of a first radiant flux of the outcoupled first radiation 111 and a second radiant flux of the outcoupled second radiation 121 gradually varies over the first face 251.

The light generating system 1000 may be configured to generate system light 1001 comprising one or more of (i) at least part of the outcoupled first radiation 111 and (ii) at least part of the outcoupled second radiation 121.

The first radiation 111 may have a first optical axis O1 and the second radiation 121 may have a second optical axis O2. The first optical axis O1 and the second optical axis O2 may have a mutual angle $\alpha$1 which may be unequal to 0° and 360°. In embodiments, the mutual angle $\alpha$1 may be selected from the range of 135-225°.

The first light generating device 110, the second light generating device 120, and the light outcoupling structures 260 may be configured such that there may be a homogeneous distribution of the first radiant flux over the first face 251 of the outcoupled first radiation 111 and an inhomogeneous distribution of the second radiation flux over the first face 251.

Fig. 1, middle drawing shows a top view of the first face 251. By way of example, a plurality of first light generating devices 110 and a plurality of second light generating devices 120 are depicted.

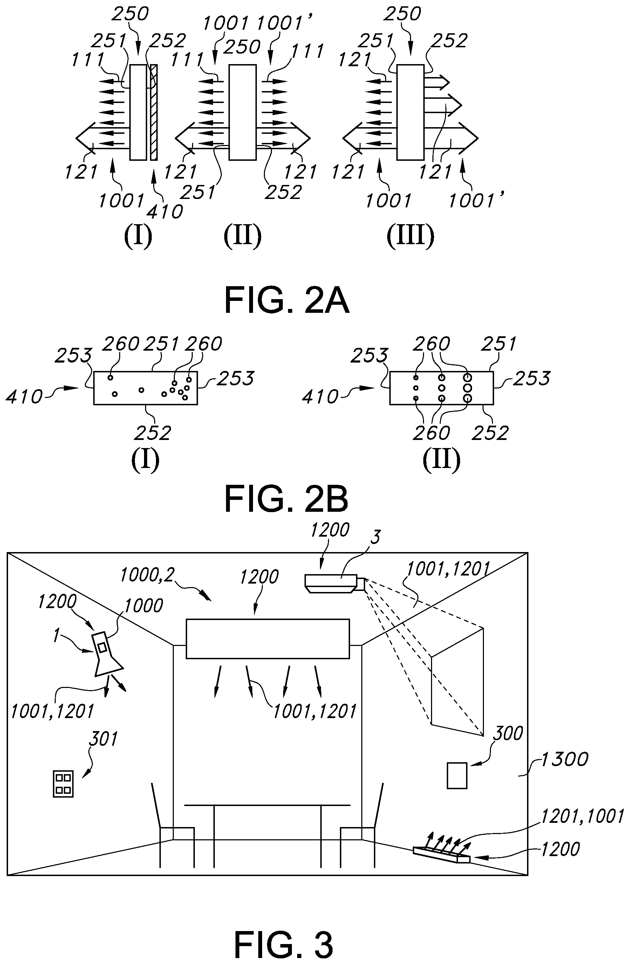

Referring to the top drawing and middle drawing of Fig. 1, one or more of the dimensions, density, and concentration of the light outcoupling structures 260 may increase with increasing distance from the first light generating device 110 and/or the first side face part 2531 (see also below). However, in a direction parallel to the first side face part 2531 and/or the second side face part 2532, i.e. here parallel to the width W, the dimensions, density, and concentration of the light outcoupling structures 260 may essentially be constant (see also Fig. 2, embodiment II).

Fig. 1, lower drawing, schematically show the radiant flux over a cross-section of the first face 251 for respectively the first radiation 111, indicated with $\Phi$1, and the second radiant flux $\Phi$2 of the second radiation 121. Whereas the former may be distribution substantially even over the first face, the later may show inhomogeneity, like a gradual decrease or increase. Note that the schematically depicted spatial distribution of the radiant flux is only provided as example. Other distributions may also be possible. Perpendicular to the width, the spatial distributions of the radiant flux (or luminous flux) may essentially be constant. Fig. 1, lower drawing, may in embodiments also apply to the luminous flux.

The one or more side faces 253 comprise a first side face part 2531 and a second side face part 2532 may be configured either (i) under an angle larger than 0° or smaller than 180° or (ii) opposite of each other with the lightguide body 250 configured in between.

The first light generating device 110 may be configured to irradiate the first side face part 2531. The second light generating device 120 may be configured to irradiate the second side face part 2532.

In embodiments, one or more of dimensions, density, and concentration of the light outcoupling structures 260 may be selected such that there may be a homogeneous distribution of the first radiant flux over the first face 251 of the outcoupled first radiation 111.

The light generating system 1000 may comprise one or more of a plurality of first light generating devices 110 and plurality of second light generating devices 120.

Referring to Fig. 1, especially the upper and the middle drawing, herein the following embodiments are included:

- only light generating devices on the two opposite sides;
- only one pattern of light outcoupling structures at one of the first face and the second face;
- a diffuser at one side, especially the at the side of the first face;
- a reflector at the other side, especially at the side of the second face;
- at one part of the side face white LED and at another part of the side face white LEDs;
- at one part of the side face white LED and at another part of the side face UV LEDs;

- at one part of the side face white LED and at another part of the side face white LEDs and UV LEDs;
- a gradient in CCT on one side but color on the side, e.g. a gradient from a high CCT to a low CCT in the center of the light guide but on one side substantially red light. Such a configuration can be realized with (high CCT) white LEDs on one side and a red LED on the other side.
- Gradient in CCT on one side but color on the other side, e.g. a gradient from a low CCT to a high CCT in the center of the light guide but on one side blue light. Such a configuration can be realized with (low CCT) white LEDs on one side and a blue LED on the other side.

Figs. 2a-2b schematically depict some embodiments.

Referring to Fig. 2a, in embodiment I at one side, especially at the side of the second face 252, a reflector 410 is configured. Further, it is schematically depicted that the first radiation is homogeneously distributed over the first face 251, whereas the second radiation 121 is inhomogeneously distributed over the first face 251.

Referring to Fig. 2a, in embodiment II, system 1001 light may escape from both sides. To distinguish, the references 1001' and 1001' are used. Further, it is schematically depicted that the first radiation is homogeneously distributed over the first face 251 and the second face 252, whereas the second radiation 121 is inhomogeneously distributed over the first face 251 and the second face 252.

Embodiment III of Fig. 2a is essentially the same as embodiment II, though essentially only second radiation 121 may escape from both faces, and first radiation 111 may essentially only escape from one face.

Referring to Figs. 1 and 2b, one or more of the dimensions, density, and concentration of the light outcoupling structures 260 may increase with increasing distance from the first light generating device 110. One or more of the dimensions, density, and concentration of the light outcoupling structures 260 may decrease with increasing distance from the second light generating device 120.

Embodiment I of Fig. 2b, schematically depicts the embodiment wherein the concentration (or density) of the light outcoupling structures 260 increases with increasing distance from the first light generating device 110. Note that the light generating device 110 are not depicted. Effectively, the concentration (or density) of the light outcoupling structures 260 may increase with increasing distance from the first side face part.

Embodiment II of Fig. 2b, schematically depicts the embodiment wherein a dimension of the light outcoupling structures 260 increases with increasing distance from the first light generating device 110. Note that the light generating device 110 are not depicted. Effectively, the concentration (or density) of the light outcoupling structures 260 increases with increasing distance from the first side face part. Here, the dimension is the diameter of the light outcoupling structures 260.

Note that the one or more of the dimensions, density, and concentration of the light outcoupling structures (260) may be essentially constant in a direction parallel to the first side face part 2531 and/or the second side face part 2532.

The first side face part 2531 and the second side face part 2532 may be configured opposite of each other with the lightguide body 250 configured in between, The lightguide body 250 has a cuboid-like structure with a height H, defined by the first face 251 and a second face 252, and four side face parts 2531,2532,2533,2534 bridging the first face 251 and the second face 252, and defining a length L and a width W, L>H, W>H, and (optionally) L≥W.

In embodiments, the light outcoupling structures 260 may comprise a first type of light outcoupling structures 261 and a second type of light outcoupling structures 262. In embodiments, the first type of light outcoupling structures 261 may more efficiently couple first device radiation 111 out than second device radiation 121. The second types of light outcoupling structures 262 may more efficiently couple second device radiation 121 out than first device radiation 111.

The first radiation 111 may be visible radiation. The first radiation 111 may be white light. The second radiation 121 may be colored light.

The first radiation 111 may be white light, and the second radiation 121 may comprise one or more of UV-A, UV-B, and UV-C radiation.

The first radiation 111 may be white light, and the second radiation 121 may be white light having one or more of a different color point, a different correlated color temperature, and a different Melanopic Daylight Efficacy Ratio (MDER), from the first radiation 111.

The light generating system 1000 may further comprise a control system 300 configured to individually control the first light generating device 110 and the second light generating device 120.

In specific embodiments, the light generating system 1000 may comprise a plurality of lighting arrangements 1100.

In embodiments, the invention provides a light generating system comprising: (A) a first light generating device is configured to generate first light; (B) a second light generating device is configured to generate second light; (C) a lightguide plate comprising (i) two faces and (ii) edge parts bridging a distance between the two faces; wherein the lightguide plate is transmissive for the first light and the second light; (D) the light generating system is configured to couple first light from the first light generating device into the lightguide plate via a first edge part of the edge parts, wherein the incoupled first light at the first edge part has a first optical axis (O1); and wherein the lighting system is configured to couple second light from the second light generating device into the lightguide plate via a second edge part of the edge part (different from the first edge part), wherein the incoupled second light at the second edge part has an second optical axis (O2), wherein the O1 and the O2 are configured parallel (or when taking into account directions: anti-parallel, i.e. a mutual angle of 180°); and (E) the light generating system is configured to couple at least part of the incoupled first light out from the lightguide plate via one or more of the two faces; and wherein the lighting system is configured to couple at least part of the incoupled second light out from the lightguide plate via one or more of the two faces; (F) wherein the lightguide plate comprises light outcoupling structures configured to couple out the first light and the second light; (G) wherein the first light is different from the second light in terms of color point; and (H) wherein the light outcoupling structures increases in density (especially defined by the number and/or size of the light outcoupling structures) with increasing distance from the first light generating device and the light outcoupling structures decreases in density (especially defined by the number and/or size of the light outcoupling structures) with increasing distance from the second light generating device.

In this way, the first light may be homogeneously coupled out and the second light may be inhomogeneously coupled out from the lightguide plate via at least one of the two faces.

In specific embodiments, instead of fully light outcoupling of the first light, optical calculations show that the gradient in light outcoupling structures should be designed such that only 70-90% of the first light is coupled out from the lightguide plate. In this way an improved gradient of second light may be obtained.

In embodiments, the light generating system may comprise a controller (or "control system") for individually controlling the first and second light generating device.

In embodiments, the first and second light generating device may be configured to provide white light having a CCT difference of at least 1000 K.

In embodiments, the first light generating device may be configured to provide white light and second light generating device may be configured to provide blue and/or red light

In embodiments, the first and/or second light generating device may comprise LED strips.

In embodiments, a reflector may be configured at the back.

In embodiments, a diffuser may be configured downstream of the first face.

Further, amongst others herein a disinfection-illumination light generating system using wavelength dependent light out-coupling is proposed. In embodiments, a disinfection light generating system may be configured to provide system light. The disinfection light generating system may comprise: (A) a white LED light generating device configured to, in operation, emit white light; (B) a UV LED light generating device configured to, in operation, emit UV light; (C) a light guide plate comprising a first face, a second face, and an edge bridging a distance between the first and second faces; wherein the lightguide plate is transmissive for the UV light and the white light; and (D) the light guide plate may comprise first light outcoupling structures for light out-coupling of the white light and second light outcoupling structures for (only/mainly) light out-coupling of the UV light (and less out-coupling of white light).

Fig. 3 schematically depicts an embodiment of a luminaire 2 comprising the light generating system 1000 as described above. Reference 301 indicates a user interface which may be functionally coupled with the control system 300 comprised by or functionally coupled to the light generating system 1000. Fig. 3 also schematically depicts an embodiment of lamp 1 comprising the light generating system 1000. Reference 3 indicates a projector device or projector system, which may be used to project images, such as at a wall, which may also comprise the light generating system 1000. Hence, Fig. 3 schematically depicts embodiments of a lighting device 1200 selected from the group of a lamp 1, a luminaire 2, a projector device 3, a disinfection device, a photochemical reactor, and an optical wireless communication device, comprising the light generating system 1000 as described herein. In embodiments, such lighting device may be a lamp 1, a luminaire 2, a projector device 3, a disinfection device, or an optical wireless communication device. Lighting device light escaping from the lighting device 1200 is indicated with reference 1201. Lighting device light 1201 may essentially consist of system light 1001, and may in specific embodiments thus be system light 1001.

The term "plurality" refers to two or more.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%.

The term "comprise" also includes embodiments wherein the term "comprises" means "consists of".

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation. As will be clear to the person skilled in the art, the invention is not limited to methods of operation, or devices, apparatus, or systems in operation.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage. In yet a further aspect, the invention (thus) provides a software product, which, when running on a computer is capable of bringing about (one or more embodiments of) the method as described herein.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

**1.** A light generating system (1000) comprising a lighting arrangement (1100), wherein the lighting arrangement (1100) comprises a lightguide body (250), a first light generating device (110), and a second light generating device (120), wherein:

- the first light generating device (110) is configured to generate first radiation (111) having a first spectral power distribution having wavelength in one or more of UV and visible; the second light generating device (120) is configured to generate second radiation (121) having a second spectral power distribution having a wavelength in one or more of UV and visible; wherein the first spectral power distribution and the second spectral power distribution differ;
- the lightguide body (250) comprises a first face (251) and one or more side faces (253) configured under an angle with the first face (251); wherein the lightguide body (250) comprises light outcoupling structures (260);
- the first light generating device (110), the second light generating device (120), and the lightguide body (250) are configured such that at least part of the first radiation (111) and the second radiation (121) is coupled into the lightguide body (250) via the one or more side faces (253), and at least part of the incoupled first radiation (111) and second radiation (121) is coupled out from the lightguide body (250) via the first face (251);
- the first light generating device (110), the second light generating device (120), and the light outcoupling structures (260) are configured such that a ratio of a first radiant flux of the outcoupled first radiation (111) and a second radiant flux of the outcoupled second radiation (121) gradually varies over the first face (251); and
- the light generating system (1000) is configured to generate system light (1001) comprising one or more of (i) at least part of the outcoupled first radiation (111) and (ii) at least part of the outcoupled second radiation (121);

wherein the light outcoupling structures (260) comprise a first type of light outcoupling structures (261) **characterized in that** said light outcoupling structures (260) comprise a second type of light outcoupling structures (262), wherein the first type of light outcoupling structures (261) more efficiently couple first device radiation (111) out than second device radiation (121), and wherein the second types of light outcoupling structures (262) more efficiently couple second device radiation (121) out than first device radiation (111).

2. The light generating system (1000) according to claim 1, wherein the first radiation (111) has a first optical axis (O1) and wherein the second radiation (121) has a second optical axis (O2); wherein the first optical axis (O1) and the second optical axis (O2) have a mutual angle ($\alpha$1) which is unequal to 0° and 360°.

3. The light generating system (1000) according to any one of the preceding claims, wherein the light outcoupling structures form diffractive structures.

4. The light generating system (1000) according to any one of the preceding claims, wherein the first light generating device (110), the second light generating device (120), and the light outcoupling structures (260) are configured such that there is a homogeneous distribution of the first radiant flux over the first face (251) of the outcoupled first radiation (111) and an inhomogeneous distribution of the second radiation flux over the first face (251).

5. The light generating system (1000) according to any one of the preceding claims, wherein the one or more side faces (253) comprise a first side face part (2531) and a second side face part (2532) configured either (i) under an angle larger than 0° or smaller than 180° or (ii) opposite of each other with the lightguide body (250) configured in between; wherein the first light generating device (110) is configured to irradiate the first side face part (2531), and wherein the second light generating device (120) is configured to irradiate the second side face part (2532).

6. The light generating system (1000) according to claim 5, wherein one or more of dimensions, density, and concentration of the light outcoupling structures (260) is selected such that there is a homogeneous distribution of the first radiant flux over the first face (251) of the outcoupled first radiation (111); wherein the light generating system (1000) comprises one or more of a plurality of first light generating devices (110) and plurality of second light generating devices (120).

7. The light generating system (1000) according to claim 6, wherein one or more of the dimensions, density, and concentration of the light outcoupling structures (260) increases with increasing distance from the first light generating device (110), and wherein one or more of the dimensions, density, and concentration of the light outcoupling structures (260) decreases with increasing distance from the second light generating device (120).

8. The light generating system (1000) according to any one of the preceding claims 5-7, wherein the first side face part (2531) and the second side face part (2532) are configured opposite of each other with the lightguide body (250) configured in between, wherein the lightguide body (250) has a cuboid-like structure with a height (H), defined by the first face (251) and a second face (252), and four side face parts (2531,2532,2533,2534) bridging the first face (251) and the second face (252), and defining a length (L) and a width (W), wherein L>H, W>H, and L$\geq$W.

9. The light generating system (1000) according to any one of the preceding claims, wherein the light outcoupling structures have sizes in a range of the radiation that has to couple out.

10. The light generating system (1000) according to any one of the preceding claims, wherein the first radiation (111) is white light, and wherein the second radiation (121) is colored light.

11. The light generating system (1000) according to any one of the preceding claims 1-9, wherein the first radiation (111) is white light, and wherein the second radiation (121) is comprises one or more of UV-A, UV-B, and UV-C radiation.

12. The light generating system (1000) according to any one of the preceding claims 1-9, wherein the first radiation (111) is white light, wherein the second radiation (121) is white light having one or more of a different correlated color temperature, and a different Melanopic Daylight Efficacy ratio, MDER, from the first radiation (111).

13. The light generating system (1000) according to any one of the preceding claims, further comprising a control system (300) configured to individually control the first light generating device (110) and the second light generating device (120).

14. The light generating system (1000) according to any one of the preceding claims, wherein the first type of light outcoupling structures (261) and/or the second type of light outcoupling structures (262) comprise one or more dichroic mirrors and/or one or more photonic crystals.

**15.** A lighting device (1200) selected from the group of a lamp (1), a luminaire (2), comprising the light generating system (1000) according to any one of the preceding claims.

**Patentansprüche**

**1.** Lichterzeugungssystem (1000), umfassend eine Beleuchtungsanordnung (1100), wobei die Beleuchtungsanordnung (1100) einen Lichtwellenleiterkörper (250), eine erste Lichterzeugungsvorrichtung (110) und eine zweite Lichterzeugungsvorrichtung (120) umfasst, wobei:

- die erste Lichterzeugungsvorrichtung (110) konfiguriert ist, um eine erste Strahlung (111) zu erzeugen, die eine erste Spektralverteilung aufweist, die eine Wellenlänge in einem oder mehreren von UV und sichtbar aufweist; die zweite Lichterzeugungsvorrichtung (120) konfiguriert ist, um eine zweite Strahlung (121) zu erzeugen, die eine zweite Spektralverteilung aufweist, die eine Wellenlänge in einer oder mehreren von UV und sichtbar aufweist; wobei die erste Spektralverteilung und die zweite Spektralverteilung sich unterscheiden;
- der Lichtwellenleiterkörper (250) eine erste Fläche (251) und eine oder mehrere Seitenflächen (253) umfasst, die in einem Winkel zu der ersten Fläche (251) konfiguriert sind; wobei der Lichtwellenleiterkörper (250) Lichtauskopplungsstrukturen (260) umfasst;
- die erste Lichterzeugungsvorrichtung (110), die zweite Lichterzeugungsvorrichtung (120) und der Lichtwellenleiterkörper (250) derart konfiguriert sind, dass mindestens ein Teil der ersten Strahlung (111) und der zweiten Strahlung (121) über die eine oder die mehreren Seitenflächen (253) in den Lichtwellenleiterkörper (250) eingekoppelt wird und mindestens ein Teil der eingekoppelten ersten Strahlung (111) und der eingekoppelten zweiten Strahlung (121) über die erste Fläche (251) aus dem Lichtwellenleiterkörper (250) ausgekoppelt wird;
- die erste Lichterzeugungsvorrichtung (110), die zweite Lichterzeugungsvorrichtung (120) und die Lichtauskopplungsstrukturen (260) derart konfiguriert sind, dass ein Verhältnis eines ersten Strahlungsflusses der ausgekoppelten ersten Strahlung (111) und eines zweiten Strahlungsflusses der ausgekoppelten zweiten Strahlung (121) über die erste Fläche (251) allmählich variiert; und
- das Lichterzeugungssystem (1000) konfiguriert ist, um Systemlicht (1001) zu erzeugen, umfassend einen oder mehrere von (i) mindestens einem Teil der ausgekoppelten ersten Strahlung (111) und (ii) mindestens einem Teil der ausgekoppelten zweiten Strahlung (121);

wobei die Lichtauskopplungsstrukturen (260) eine erste Art von Lichtauskopplungsstrukturen (261) umfassen, **dadurch gekennzeichnet, dass** die Lichtauskopplungsstrukturen (260) eine zweite Art von Lichtauskopplungsstrukturen (262) umfassen, wobei die erste Art von Lichtauskopplungsstrukturen (261) die erste Vorrichtungsstrahlung (111) wirksamer als die zweite Vorrichtungsstrahlung (121) auskoppelt, und wobei die zweiten Arten von Lichtauskopplungsstrukturen (262) die zweite Vorrichtungsstrahlung (121) wirksamer als die erste Vorrichtungsstrahlung (111) auskoppeln.

**2.** Lichterzeugungssystem (1000) nach Anspruch 1, wobei die erste Strahlung (111) eine erste optische Achse (O1) aufweist und wobei die zweite Strahlung (121) eine zweite optische Achse (O2) aufweist; wobei die erste optische Achse (O1) und die zweite optische Achse (O2) einen gemeinsamen Winkel ($\alpha$1) aufweisen, der ungleich 0° und 360° ist.

**3.** Lichterzeugungsvorrichtung (1000) nach einem der vorstehenden Ansprüche, wobei die Lichtauskopplungsstrukturen Beugungsstrukturen ausbilden.

**4.** Lichterzeugungssystem (1000) nach einem der vorstehenden Ansprüche, wobei die erste Lichterzeugungsvorrichtung (110), die zweite Lichterzeugungsvorrichtung (120) und die Lichtauskopplungsstrukturen (260) derart konfiguriert sind, dass eine homogene Verteilung des ersten Strahlungsflusses über die erste Fläche (251) der ausgekoppelten ersten Strahlung (111) und eine inhomogene Verteilung des zweiten Strahlungsflusses über die erste Fläche (251) vorliegt.

**5.** Lichterzeugungssystem (1000) nach einem der vorstehenden Ansprüche, wobei die eine oder die mehreren Seitenflächen (253) einen ersten Seitenflächenteil (2531) und einen zweiten Seitenflächenteil (2532) umfassen, die entweder (i) in einem Winkel größer als 0° oder kleiner als 180° konfiguriert sind oder (ii) einander gegenüberliegend mit dem dazwischen konfigurierten Lichtwellenleiterkörper (250) konfiguriert sind; wobei die erste Lichterzeugungsvorrichtung (110) konfiguriert ist, um den ersten Seitenflächenteil (2531) zu bestrahlen, und wobei die zweite Lichterzeugungsvorrichtung (120) konfiguriert ist, um den zweiten Seitenflächenteil (2532) zu bestrahlen.

6. Lichterzeugungssystem (1000) nach Anspruch 5, wobei eine oder mehrere von Abmessungen, einer Dichte und einer Konzentration der Lichtauskopplungsstrukturen (260) derart ausgewählt sind, dass eine homogene Verteilung des ersten Strahlungsflusses über die erste Fläche (251) der ausgekoppelten ersten Strahlung (111) vorliegt; wobei das Lichterzeugungssystem (1000) eine oder mehrere von einer Vielzahl von ersten Lichterzeugungsvorrichtungen (110) und einer Vielzahl von zweiten Lichterzeugungsvorrichtungen (120) umfasst.

7. Lichterzeugungssystem (1000) nach Anspruch 6, wobei eine oder mehrere der Abmessungen, der Dichte und der Konzentration der Lichtauskopplungsstrukturen (260) mit zunehmender Entfernung von der ersten Lichterzeugungsvorrichtung (110) zunehmen und wobei eine oder mehrere der Abmessungen, der Dichte und der Konzentration der Lichtauskopplungsstrukturen (260) mit zunehmender Entfernung von der zweiten Lichterzeugungsvorrichtung (120) abnehmen.

8. Lichterzeugungssystem (1000) nach einem der vorstehenden Ansprüche 5 bis 7, wobei der erste Seitenflächenteil (2531) und der zweite Seitenflächenteil (2532) einander gegenüberliegend konfiguriert sind, wobei der Lichtwellenleiterkörper (250) dazwischen konfiguriert ist, wobei der Lichtwellenleiterkörper (250) eine quaderförmige Struktur mit einer Höhe (H) aufweist, die durch die erste Fläche (251) und eine zweite Fläche (252) und vier Seitenflächenteile (2531, 2532, 2533, 2534), die die erste Fläche (251) und die zweite Fläche (252) überbrücken, definiert ist und eine Länge (L) und eine Breite (W) definieren, wobei L>H, W>H und L≥W.

9. Lichterzeugungssystem (1000) nach einem der vorstehenden Ansprüche, wobei die Lichtauskopplungsstrukturen Größen in einem Bereich der auszukoppelnden Strahlung aufweisen.

10. Lichterzeugungssystem (1000) nach einem der vorstehenden Ansprüche, wobei die erste Strahlung (111) weißes Licht ist und wobei die zweite Strahlung (121) farbiges Licht ist.

11. Lichterzeugungssystem (1000) nach einem der vorstehenden Ansprüche 1 bis 9, wobei die erste Strahlung (111) weißes Licht ist und wobei die zweite Strahlung (121) eine oder mehrere von UV-A-, UV-B- und UV-C-Strahlung ist umfasst.

12. Lichterzeugungssystem (1000) nach einem der vorstehenden Ansprüche 1 bis 9, wobei die erste Strahlung (111) weißes Licht ist, wobei die zweite Strahlung (121) weißes Licht ist, das eine oder mehrere von einer anderen korrelierten Farbtemperatur und eines anderen melanopischen Tageslicht-Wirkungsverhältnisses, MDER, von der ersten Strahlung (111) aufweist.

13. Lichterzeugungssystem (1000) nach einem der vorstehenden Ansprüche, ferner umfassend ein Steuersystem (300), das konfiguriert ist, um die erste Lichterzeugungsvorrichtung (110) und die zweite Lichterzeugungsvorrichtung (120) einzeln zu steuern.

14. Lichterzeugungssystem (1000) nach einem der vorstehenden Ansprüche, wobei die erste Art von Lichtauskopplungsstrukturen (261) und/oder die zweite Art von Lichtauskopplungsstrukturen (262) einen oder mehrere dichroitische Spiegel und/oder einen oder mehrere photonische Kristalle umfasst.

15. Beleuchtungsvorrichtung (1200), die aus der Gruppe einer Lampe (1), einer Leuchte (2), umfassend das Lichterzeugungssystem (1000) nach einem der vorstehenden Ansprüche, ausgewählt ist.

**Revendications**

1. Système générateur de lumière (1000) comprenant un agencement d'éclairage (1100), dans lequel l'agencement d'éclairage (1100) comprend un corps de guide de lumière (250), un premier dispositif générateur de lumière (110) et un second dispositif générateur de lumière (120), dans lequel :

   - le premier dispositif générateur de lumière (110) est configuré pour générer un premier rayonnement (111) ayant une première distribution de puissance spectrale ayant une longueur d'onde dans un ou plusieurs parmi UV et visible ; le second dispositif générateur de lumière (120) est configuré pour générer un second rayonnement (121) ayant une seconde distribution de puissance spectrale ayant une longueur d'onde dans un ou plusieurs parmi UV et visible ; dans lequel la première distribution de puissance spectrale et la seconde distribution de puissance spectrale diffèrent ;

- le corps de guide de lumière (250) comprend une première face (251) et une ou plusieurs faces latérales (253) configurées selon un angle avec la première face (251) ; dans lequel le corps de guide de lumière (250) comprend des structures de couplage de sortie de lumière (260) ;

- le premier dispositif générateur de lumière (110), le second dispositif générateur de lumière (120) et le corps de guide de lumière (250) sont configurés de sorte qu'au moins une partie du premier rayonnement (111) et du second rayonnement (121) est couplée dans le corps de guide de lumière (250) par l'intermédiaire de la ou des faces latérales (253), et au moins une partie du premier rayonnement (111) et du second rayonnement (121) couplée en entrée est couplée en sortie du corps de guide de lumière (250) par l'intermédiaire de la première face (251) ;

- le premier dispositif générateur de lumière (110), le second dispositif générateur de lumière (120) et les structures de couplage de sortie de lumière (260) sont configurés de sorte qu'un rapport d'un premier flux rayonnant du premier rayonnement (111) couplé en sortie et d'un second flux rayonnant du second rayonnement (121) couplé en sortie varie progressivement sur la première face (251) ; et

- le système générateur de lumière (1000) est configuré pour générer de la lumière de système (1001) comprenant une ou plusieurs parmi (i) au moins une partie du premier rayonnement (111) couplé en sortie et (ii) au moins une partie du second rayonnement (121) couplé en sortie ;

dans lequel les structures de couplage de sortie de lumière (260) comprennent un premier type de structures de couplage de sortie de lumière (261) **caractérisé en ce que** lesdites structures de couplage de sortie de lumière (260) comprennent un second type de structures de couplage de sortie de lumière (262), dans lequel le premier type de structures de couplage de sortie de lumière (261) couple plus efficacement un premier rayonnement (111) de dispositif en sortie qu'un second rayonnement (121) de dispositif, et dans lequel les seconds types de structures de couplage de sortie de lumière (262) couplent plus efficacement le second rayonnement (121) de dispositif en sortie que le premier rayonnement de dispositif (111).

2. Système générateur de lumière (1000) selon la revendication 1, dans lequel le premier rayonnement (111) a un premier axe optique (O1) et dans lequel le second rayonnement (121) a un second axe optique (O2) ; dans lequel le premier axe optique (O1) et le second axe optique (O2) ont un angle mutuel ($\alpha$1) qui n'est pas égal à 0° et 360°.

3. Système générateur de lumière (1000) selon l'une quelconque des revendications précédentes, dans lequel les structures de couplage de sortie de lumière forment des structures de diffraction.

4. Système générateur de lumière (1000) selon l'une quelconque des revendications précédentes, dans lequel le premier dispositif générateur de lumière (110), le second dispositif générateur de lumière (120) et les structures de couplage de sortie de lumière (260) sont configurés de sorte qu'il y a une distribution homogène du premier flux rayonnant sur la première face (251) du premier rayonnement (111) couplé en sortie et une distribution non homogène du second flux rayonnant sur la première face (251).

5. Système générateur de lumière (1000) selon l'une quelconque des revendications précédentes, dans lequel la ou les faces latérales (253) comprennent une première partie de face latérale (2531) et une seconde partie de face latérale (2532) configurée soit (i) selon un angle plus grand que 0° ou plus petit que 180°, soit (ii) opposée l'une à l'autre avec le corps de guide de lumière (250) configuré entre elles ; dans lequel le premier dispositif générateur de lumière (110) est configuré pour irradier la première partie de face latérale (2531), et dans lequel le second dispositif générateur de lumière (120) est configuré pour irradier la seconde partie de face latérale (2532).

6. Système générateur de lumière (1000) selon la revendication 5, dans lequel une ou plusieurs parmi les dimensions, la densité et la concentration des structures de couplage de sortie de lumière (260) sont sélectionnées de telle sorte qu'il y a une distribution homogène du premier flux rayonnant sur la première face (251) du premier rayonnement (111) couplé en sortie ; dans lequel le système générateur de lumière (1000) comprend un ou plusieurs parmi une pluralité de premiers dispositifs générateurs de lumière (110) et une pluralité de seconds dispositifs générateurs de lumière (120).

7. Système générateur de lumière (1000) selon la revendication 6, dans lequel une ou plusieurs parmi les dimensions, la densité et la concentration des structures de couplage de sortie de lumière (260) augmentent avec une distance qui augmente par rapport au premier dispositif générateur de lumière (110), et dans lequel une ou plusieurs parmi les dimensions, la densité et la concentration des structures de couplage de sortie de lumière (260) diminue avec une distance qui augmente par rapport au second dispositif générateur de lumière (120).

8. Système générateur de lumière (1000) selon l'une quelconque des revendications 5 à 7 précédentes, dans lequel la première partie de face latérale (2531) et la seconde partie de face latérale (2532) sont configurées opposées l'une à l'autre avec le corps de guide de lumière (250) configuré entre elles, dans lequel le corps de guide de lumière (250) a une structure de type parallélépipédique avec une hauteur (H), définie par la première face (251) et une seconde face (252), et quatre parties de face latérale (2531, 2532, 2533, 2534) enjambant la première face (251) et la seconde face (252), et définissant une longueur (L) et une largeur (W), dans lequel L>H, W>H, et L≥W.

9. Système générateur de lumière (1000) selon l'une quelconque des revendications précédentes, dans lequel les structures de couplage de sortie de lumière ont des tailles dans une plage du rayonnement qui doit être couplé en sortie.

10. Système générateur de lumière (1000) selon l'une quelconque des revendications précédentes, dans lequel le premier rayonnement (111) est de la lumière blanche, et dans lequel le second rayonnement (121) est de la lumière colorée.

11. Système générateur de lumière (1000) selon l'une quelconque des revendications 1 à 9 précédentes, dans lequel le premier rayonnement (111) est de la lumière blanche, et dans lequel le second rayonnement (121) comprend un ou plusieurs parmi un rayonnement UV-A, UV-B et UV-C.

12. Système générateur de lumière (1000) selon l'une quelconque des revendications 1 à 9 précédentes, dans lequel le premier rayonnement (111) est de la lumière blanche, dans lequel le second rayonnement (121) est de la lumière blanche ayant un ou plusieurs parmi une température de couleur corrélée différente, et un rapport d'efficacité de lumière du jour mélanopique, MDER, différent par rapport au premier rayonnement (111).

13. Système générateur de lumière (1000) selon l'une quelconque des revendications précédentes, comprenant en outre un système de commande (300) configuré pour commander individuellement le premier dispositif générateur de lumière (110) et le second dispositif générateur de lumière (120).

14. Système générateur de lumière (1000) selon l'une quelconque des revendications précédentes, dans lequel le premier type de structures de couplage de sortie de lumière (261) et/ou le second type de structures de couplage de sortie de lumière (262) comprennent un ou plusieurs miroirs dichroïques et/ou un ou plusieurs cristaux photoniques.

15. Dispositif d'éclairage (1200) sélectionné dans le groupe d'une lampe (1), d'un luminaire (2), comprenant le système générateur de lumière (1000) selon l'une quelconque des revendications précédentes.

FIG. 1

FIG. 2A

FIG. 2B

FIG. 3

**EP 4 500 078 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120243256 A
- WO 9922268 A
- WO 2012059866 A
- WO 2018041470 A
- WO 03027569 A

### Non-patent literature cited in the description

- CRC Handbook of Chemistry and Physics, 1088-1989